# FASCICULE DE BREVET EUROPEEN

(11) **EP 3 445 515 B1**
(45) Date de publication et mention de la délivrance du brevet: **27.05.2020**
(21) Numéro de dépôt: 17720423.7
(22) Date de dépôt: 22.04.2017
(51) Int. Cl.: B22F 3/105, B22F 5/10, B22F 7/08, B23K 31/02, B29C 64/40, B33Y 10/00, B33Y 40/00, B23K 101/00, B23K 103/04

(54) **PROCÉDÉ DE FABRICATION ADDITIVE D'UNE PIÈCE ÉTAGÉE À SECTION VARIABLE COMPORTANT UNE PARTIE NON SUPPORTÉE**
GENERATIVES HERSTELLUNGSVERFAHREN EINES MEHRSTUFIGEN WERKSTÜCKS MIT VARIABLEM QUERSCHNITT UMFASSEND EINEN ÜBERHÄNGENDEN TEIL
PROCESS FOR ADDITIVE MANUFACTURING A MULTILEVEL ARTICLE WITH VARIABLE SECTION COMPRISING AN OVERHANG

(30) Priorité: 22.04.2016 FR 1670190
(43) Date de publication de la demande: 27.02.2019
(73) Titulaire: Ecole Centrale De Nantes, 44300 Nantes (FR)
(72) Inventeur: HASCOET, Jean-Yves, 44300 NANTES (FR); CARABIN, Gilles, 44330 VALLET (FR); BROQUIN, Thierry, 49300 LE PUY SAINT BONNET (FR)
(74) Mandataire: Ipside
(86) Numéro de dépôt international: PCT/EP2017/059580
(87) Numéro de publication internationale: WO 2017/182668

(56) Documents cités:
- WO-A1-2013/079725
- US-A1- 2015 037 498
- US-B1- 6 410 105

## Description

L'invention concerne un procédé pour la fabrication d'une pièce étagée à section variable comportant au moins une partie non supportée mettant en œuvre un procédé de fabrication additive par dépôt de matière en strates successives. L'invention appartient au domaine de la fabrication additive par dépôt de matière, c'est-à-dire, un procédé dans lequel de la matière en fusion est déposée par strates successives afin de réaliser une forme. Le document EP 2 785 492 décrit un exemple d'un tel procédé où de la poudre métallique en fusion est déposée au moyen d'une buse de projection. Ce procédé est couramment dénommé CLAD® acronyme de « *Construction Laser Additive* Directe ». D'autres procédés de fabrication additive par dépôt de métal sont également adaptés au procédé objet de l'invention couramment dénommés sous les acronymes « LMD » pour « *Déposition Métallique par Laser* » ou « WAAM » pour « *Wire plus Arc Additive Manufacturing* ». Le procédé objet de l'invention est également adapté au prototypage rapide et à l'impression 3D par la fusion d'un filament notamment en matière plastique.

Ces procédés connus de l'art antérieur, diffèrent des autres procédés de fabrication additive, comme la stéréolithographie ou le frittage d'un lit poudre, par la difficulté et même l'impossibilité de réaliser des parties non supportées.

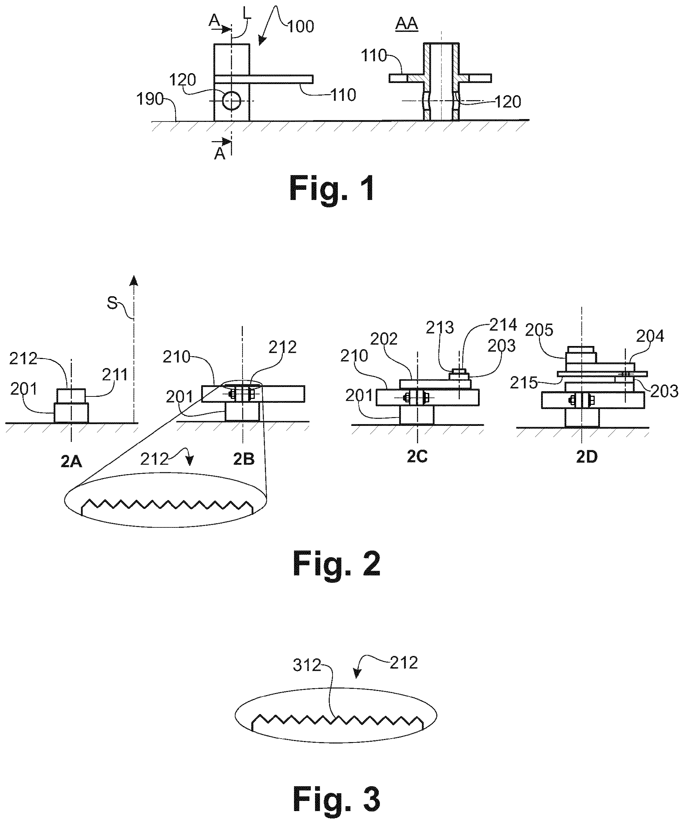

La figure 1 montre un exemple de pièce (100) comportant des parties non supportées. Selon cet exemple, la construction de la pièce (100) est réalisée par le dépôt de couches successives, ou stratification, empilées selon le grand axe (L) de la pièce, cet axe étant sensiblement vertical au cours de cette fabrication additive, ledit grand axe (L) constituant la direction de stratification. La première stratification est déposée sur un support (190) constitué, par exemple, par la table de la machine de fabrication additive. Les parties (110, 120) non supportées de la pièce sont des parties qui, au cours de la fabrication, comprennent une surface libre et qui sont soumises à un effort comprenant une composante normale à ladite surface libre. À titre d'exemple non limitatif, le poids de ladite partie non supportée constitue un tel effort. Les exemples représentés figure 1 sont les cas les plus explicites, concernant une nervure (110) ou un alésage (120) s'étendant selon une direction perpendiculaire à la direction (L) de stratification. Selon ces exemples, le dépôt de matière pour la réalisation de la nervure (110) ou pour la réalisation de la partie supérieure de l'alésage (120), est tout simplement impossible faute de couche existante pour pouvoir accrocher ledit dépôt. Dans d'autres cas, relevant également de l'invention, le dépôt de matière est possible mais la matière déposée s'effondre sous son propre poids. Dans la suite du document, la partie de pièce comprenant une telle surface libre d'une partie non supportée est dénommée « stratification libre ».

Si dans le cas correspondant à celui de l'alésage (120), il reste possible de réaliser une ébauche de la pièce par fabrication additive puis de procéder à l'alésage par enlèvement de matière, le cas de la nervure (110) reste impossible à réaliser par une technologie fabrication additive. Or, cette technologie de fabrication offre de nombreux avantages, notamment la possibilité d'obtenir des pièces de résistance mécanique élevée, permettant la réalisation de prototypes pleinement fonctionnels, en utilisant une quantité de matière proche de celle de la pièce finale. Ainsi, la réalisation d'une pièce étagée à section variable comprenant des zones en contre-dépouille par les techniques conventionnelles d'usinage par enlèvement de matière est un processus long et coûteux et la possibilité de l'utilisation de la fabrication additive pour réaliser un telle pièce, notamment à des fins de prototypage constitue un avantage.

Le document US 2015/0037498 décrit un procédé de réparation d'une pièce comprenant le dépôt d'une stratification libre sur la partie à réparer située au-dessus d'une cavité. La configuration initiale de la pièce considérée dans ce document permet d'insérer dans ladite cavité un matériau sacrificiel supportant la stratification libre lors de son dépôt. Le matériau sacrificiel est ensuite éliminé. Ce procédé, qui considère un ajout local de matière, similaire à un rechargement, n'est pas adapté à la réalisation d'une pièce comprenant une nervure (110) comme représenté figure 1.

L'invention vise à résoudre les difficultés de l'art antérieur et concerne à cette fin un procédé pour la fabrication additive, par dépôt de matière, d'une pièce pour la fabrication d'une pièce étagée à section variable comportant une partie non supportée, lequel procédé comprend les étapes consistant à :
a. déposer une première stratification de matière comprenant une forme pour le positionnement d'un support extrinsèque et une surface d'accrochage ;
b. fixer ledit support extrinsèque s'étendant entre ladite première stratification et la surface libre de la partie non supportée non encore réalisée sur la forme de positionnement en laissant émerger la surface d'accrochage de ladite première stratification ;
c. déposer une stratification, dite stratification libre, sur ledit support et sur la surface d'accrochage de la première stratification ;
d. démonter le support après la solidification de la stratification libre.

Ainsi, l'utilisation d'un support rapporté et extrinsèque à la pièce, permet de soutenir la partie non supportée au cours de l'opération de fabrication additive, autorisant ainsi, à la fois, le dépôt de matière et le support mécanique de cette partie au cours de l'opération de fabrication additive. A la différence de l'art antérieur, la stratification libre est déposée sur un support extrinsèque et non sur une couche sacrificielle. Ce support extrinsèque coopère avec des fonctionnalités, notamment de positionnement, réalisée sur la pièce lors de l'étape de fabrication précédente.

L'invention est avantageusement mise en œuvre selon les modes de réalisation et les variantes exposés ci-après, lesquels sont à considérer individuellement ou selon toute combinaison techniquement opérante.

L'étape c) du procédé objet de l'invention comprend la réalisation d'une stratification libre comprenant une forme pour le positionnement d'un support extrinsèque et une surface d'accrochage et comprend la répétition des étapes b) et c) jusqu'à la réalisation de la pièce.

Ainsi, la répétition des étapes b) et c) du procédé objet de l'invention permet la réalisation d'une pièce étagée de section variable.

Selon un mode de réalisation particulier, la forme de positionnement réalisée au cours du dépôt de la stratification libre est distante latéralement de la forme de positionnement réalisée lors de l'opération précédente par rapport à un axe parallèle à la direction de stratification.

Ainsi les formes réalisées successivement ne sont pas nécessairement centrées sur un même axe.

Avantageusement, le procédé objet de l'invention comprend après l'étape c) ou après l'étape d) une étape consistant à :
e. conférer sa forme finale à la stratification libre par un usinage par enlèvement de matière.

Ainsi, la forme, la précision et l'état de surface de la stratification libre sont améliorés par l'usinage conventionnel par enlèvement de matière. Lorsque cette opération est réalisée avant l'étape d) le support intrinsèque permet de soutenir la stratification libre vis-à-vis des efforts de coupe et ainsi d'usiner des parties peu épaisses sans risque de déformation de celles-ci.

Avantageusement, le procédé objet de l'invention comprend une étape d'usinage par enlèvement de matière de la forme de positionnement réalisée au cours de l'étape a) ou de l'étape c).

Cet usinage permet d'améliorer la précision et l'état de surface de ladite forme de positionnement.

Avantageusement, le procédé objet de l'invention comprend une étape d'usinage par enlèvement de matière de la surface d'accrochage réalisée au cours de l'étape a) ou de l'étape c).

Cette opération permet de conférer, si nécessaire, une forme particulière à cette surface de sorte à améliorer la liaison intime de la stratification libre sur cette surface d'accrochage.

Selon un mode de réalisation, le support extrinsèque est constitué d'un matériau métallique.

Plus particulièrement, le support extrinsèque est constitué d'un alliage d'aluminium et le matériau déposé par fabrication additive est un acier.

Avantageusement, la face du support extrinsèque, exposée au dépôt de la stratification libre comprend un revêtement facilitant la séparation du support et de la stratification libre lors de l'étape d) du procédé.

Selon un mode de réalisation particulier, la surface du support exposée au dépôt de la stratification libre comprend des reliefs ou des creux.

Ces fonctionnalités permettent de conférer une forme particulière à la surface de la stratification libre en contact avec le support.

L'invention est exposée ci-après selon ses modes de réalisation préférés, nullement limitatifs, et en référence aux figures 1 à 5, dans lesquelles :
- la figure 1 montre, selon une vue de face et selon une vue en coupe AA définie sur cette même figure, un exemple de pièce difficile à réaliser en fabrication additive par dépôt de matière ;
- la figure 2 montre schématiquement selon une vue de face un exemple des étapes de réalisation de l'exemple de pièce étagée de section variable de la figure 5 par la mise en œuvre du procédé objet de l'invention selon un de ses modes de réalisation ;
- la figure 3 est une vue de détail d'un exemple de réalisation de la surface d'accrochage réalisée au cours de la phase correspondant à la figure 2A ;
- la figure 4 montre selon une vue de dessus un exemple de réalisation d'un support extrinsèque ;
- et la figure 5 représente selon une vue de face et une vue de gauche, un exemple de pièce étagée de section variable réalisable par le procédé objet de l'invention.

Le procédé de fabrication objet de l'invention met avantageusement en œuvre un procédé et un dispositif de fabrication additive tels que décrits dans le document EP 2 785 492. Ainsi, ce procédé permet de réaliser dans la même phase de fabrication des opérations d'addition et d'enlèvement de matière.

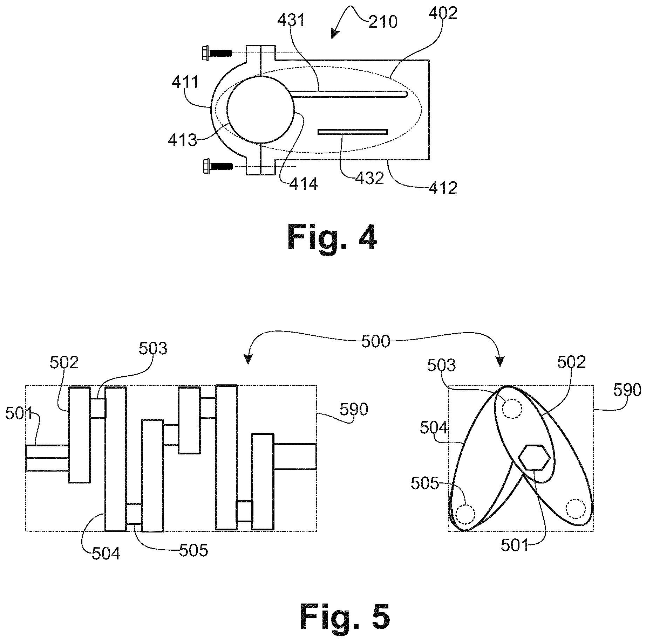

Figure 5 selon un exemple de mise en œuvre, le procédé objet de l'invention est adapté à la fabrication d'une pièce étagée (500) de section variable. Selon cet exemple schématique, l'obtention d'une telle pièce par un usinage par enlèvement de matière, nécessite de tailler celle-ci dans un volume (590) de matière important avec des difficultés de positionnement et d'ablocage. Selon un exemple non limitatif, ladite pièce comprend un premier tronçon (501) et une pluralité de plateaux (502, 504) liés entre eux par des connecteurs (503, 505). Selon cet exemple, par simplicité de représentation, les plateaux (502, 504) sont contenus dans des plans parallèles et les connecteurs (503) s'étendent sensiblement dans des directions normales auxdits plans. Ceci ne constitue cependant pas une limitation du procédé objet de l'invention, de même que les formes arbitrairement représentées des plateaux et des connecteurs, pas plus que l'épaisseur constante des plateaux. Le procédé objet de l'invention est avantageusement utilisé pour réaliser une telle pièce (500).

Figure 2A, selon un exemple de réalisation, le procédé objet de l'invention comprend une première étape de fabrication additive consistant, par exemple, à réaliser l'ébauche (201) du premier tronçon. La fabrication additive de ladite ébauche (201) est réalisée selon une direction (S) de stratification verticale. Ainsi, l'ébauche (201) du premier tronçon constitue la première stratification pour la mise en œuvre du procédé objet de l'invention. Avantageusement, cette opération de fabrication additive comprend également la réalisation d'une forme (211) pour le positionnement d'un support, par exemple sous la forme d'un épaulement. Le matériau déposé est par exemple un acier. Alternativement, la forme (211) de positionnement est réalisée par enlèvement de matière, en usinant l'ébauche (201) obtenue par fabrication additive. L'ébauche (201) du premier tronçon comprend également une surface d'accrochage (212), constituée, par exemple, de l'extrémité de la forme de positionnement.

Figure 3, selon un exemple de réalisation, la forme de la surface d'accrochage (212) est conçue de sorte à favoriser sa résistance aux sollicitations mécaniques subies par la pièce en service et à favoriser sa cohésion avec la matière déposée lors des phases suivantes, sous ces sollicitations mécaniques. Par exemple, la surface d'accrochage (212) comporte des creux ou des reliefs (312) pour, notamment, augmenter la surface développée de contact entre deux stratifications, lesdits creux ou reliefs étant réalisés en fabrication additive ou en usinage par enlèvement de matière. Selon un mode de réalisation, la surface d'accrochage (212) est décapée par enlèvement de matière, par exemple par meulage ou brossage afin de favoriser l'accrochage de la stratification libre sur celle-ci.

Figure 2B, un support (210) en deux parties est installé et serré sur l'ébauche (201) du premier tronçon, centré sur la forme (211) de positionnement et laissant émerger la surface (212) d'accrochage. Ledit support (210) est par exemple constitué d'une plaque d'aluminium.

Figure 4, le support (210) est un support amovible, démontable et, selon un mode de réalisation, réutilisable pour la fabrication d'une autre pièce similaire. Selon des exemples de réalisation, il est constitué de deux parties (411, 412), ou plus, assemblables par boulonnage, encliquetage ou encore par force magnétique, et qui comportent des aménagements (413, 414) aptes à coopérer avec la forme de positionnement réalisée sur l'ébauche au cours de l'opération précédente. Il est avantageusement de forme simple et ne suit pas nécessairement le contour (402) de la stratification libre déposée lors de l'opération suivante. La surface du support exposée au dépôt de matière lors de cette stratification libre comprend avantageusement un revêtement pour éviter toute soudure de la matière déposée sur ledit support. Dans le cas d'un support en alliage d'aluminium, l'oxydation de surface ou une anodisation suffisent à éviter un tel phénomène. D'autre revêtements sont possibles comme un dépôt CVD de céramique, ou simplement un poteyage ou l'application d'un agent démoulant au pinceau ou par pulvérisation. La surface du support recevant la stratification libre lors de l'opération suivante comprend, selon un exemple de réalisation, des aménagements en creux (431), ou en relief (432), éventuellement de section variable en hauteur/profondeur ou largeur. Une rainure (431) à la surface du support permet par exemple de réaliser une nervure sous la stratification libre. Un aménagement en relief (432) permet de réaliser une rainure sur la partie de la stratification libre en contact avec le support lors de son dépôt. Selon un mode de réalisation particulier, l'aménagement en relief (432) est obtenu en rapportant sur le support (210) une pièce de forme appropriée constituée d'un matériau réfractaire et friable de sorte à pouvoir l'éliminer ultérieurement de la pièce finale, si celui-ci est emprisonné dans celle-ci, soit par soudure avec la matière déposée, soit du fait de sa forme non-démoulable. Ces aménagements en creux ou en relief à la surface du support, sont, selon un mode de réalisation, réalisés par usinage par enlèvement de matière ou par fabrication additive à la surface du support, lorsque celui-ci est installé sur l'ébauche réalisée lors de l'opération précédente.

Figure 2C, les ébauches (202, 203) du premier plateau et du premier connecteur sont réalisées par fabrication additive, en déposant une stratification de matière, qui vis-à-vis du procédé objet de l'invention constitue la stratification libre, sur le support (210) et sur la surface d'accrochage (212), ledit support étant serré sur l'ébauche (201) du premier tronçon. Avantageusement, l'ébauche (203) du connecteur comprend un aménagement (213) pour y positionner un support, lequel aménagement étant obtenu lors de l'opération de fabrication additive ou par une opération d'usinage par enlèvement de matière subséquente, ainsi qu'une surface d'accrochage (214). Ainsi, l'ébauche (203) du connecteur devient, vis-à-vis du procédé objet de l'invention, la première stratification pour l'opération de fabrication additive subséquente. Ainsi, comme le montre cet exemple de réalisation de l'ébauche du second connecteur est décalée latéralement en regard de la direction (S) de stratification par rapport à l'ébauche du premier connecteur.

L'ébauche (202) du premier plateau, selon cet exemple de mise en oeuvre est clairement une stratification libre qui n'est pas réalisable directement par un procédé de fabrication additive par dépôt, sans la mise en œuvre du procédé objet de l'invention.

Optionnellement, les ébauches (202, 203) du plateau et du connecteur font l'objet d'un usinage de finition ou de semi-finition par enlèvement de matière. Le support (210) permet également de rigidifier l'ensemble, afin de faciliter cet usinage.

Selon cet exemple schématisé de réalisation, la surface libre du plateau est orientée perpendiculairement à l'axe vertical. En pratique cette orientation ne constitue pas une limitation du procédé objet de l'invention, et selon des variantes non détaillées, ladite surface libre est inclinée par rapport à cette direction, le pied du plateau, reliant celui-ci au premier tronçon, étant par exemple plus épais. Une telle configuration est obtenue, soit en utilisant un support dont la surface supportant la surface libre est elle-même inclinée, soit en usinant par enlèvement de matière, l'ébauche (202) du plateau, obtenue par addition de matière.

Figure 2D, un support (215) en deux parties est fixé sur l'ébauche (203) du premier connecteur, en laissant émerger la surface d'accrochage (214) de ladite ébauche (203). Ce support (215) permet de réaliser, par fabrication additive, l'ébauche (204) du deuxième plateau, constituant une stratification libre, et l'ébauche (205) du deuxième connecteur.

De la même manière que pour le premier plateau, l'obtention d'une surface libre inclinée par rapport à l'horizontale est obtenue, le cas échéant, par l'utilisation d'un support dont la surface supportant la surface libre du plateau est elle-même inclinée. L'utilisation d'un dispositif de fabrication additive tel que décrit dans le document EP 2 785 492, permet si nécessaire, de mesurer précisément la position des supports (210, 215) dans l'espace de la machine et de les usiner afin de localiser parfaitement, en forme et en orientation, la surface supportant la stratification libre lors de l'opération d'addition de matière. À cette fin, le support est avantageusement réalisé dans un matériau facilement usinable à grande vitesse avec des efforts de coupe réduits, tel qu'un alliage d'aluminium.

Les opérations décrites ci-avant sont répétées jusqu'à la réalisation complète de la pièce. Les supports (210, 215) sont alors démontés.

Selon un mode de réalisation alternatif, la pièce est réalisée comme décrit ci-dessus mais par tronçons comprenant un nombre réduit de plateaux et de connecteurs, lesdits tronçons étant ensuite soudés entre eux afin de constituer la pièce.

Alternativement également, le tronçon constituant la première stratification (201) vis-à-vis du procédé objet de l'invention, n'est pas obtenu par un procédé de fabrication additive mais par tout autre procédé d'usinage, formage ou moulage.

Selon un mode de réalisation particulier, le support extrinsèque est conservé, non démonté, sur la pièce finale. Dans ce cas une liaison intime, de type soudure est recherchée entre la stratification libre et ledit support qui n'a pas besoin d'être amovible.

La description ci-avant et les exemples de réalisation, montrent que l'invention atteint le but visé, à savoir qu'elle permet la réalisation par un procédé de fabrication additive par dépôt de matière, d'une pièce comportant des surfaces non-supportées au cours de la fabrication.

## Revendications

1. Procédé pour la fabrication additive par dépôt direct de matière, d'une pièce (500) étagée à section variable comportant une partie non supportée, lequel procédé comprend les étapes consistant à :
a. déposer une première stratification de matière (201, 203) comprenant une forme (211, 213) pour le positionnement d'un support extrinsèque (210, 215) et une surface d'accrochage (212, 214) ;
b. fixer un support extrinsèque amovible (210, 215) s'étendant entre ladite première stratification et la surface libre de la partie non supportée non encore réalisée, sur la forme de positionnement (211, 213) en laissant émerger la surface d'accrochage (212, 214) de ladite première stratification ;
c. déposer une stratification, dite stratification libre (202, 204), sur ledit support (210, 215) et sur la surface d'accrochage (212, 214) de la première stratification, ladite stratification libre (204) comprenant une forme (203) pour le positionnement d'un support extrinsèque (215) et une surface d'accrochage (214), les étapes b) et c) étant répétées jusqu'à la réalisation de la pièce ;
d. démonter le support (210, 215) après la solidification de la stratification libre (202, 204).

2. Procédé selon la revendication 1, dans lequel la forme de positionnement (213) réalisée au cours du dépôt de la stratification libre (202) est distante latéralement de la forme de positionnement (211) réalisée lors de l'opération précédente par rapport à un axe parallèle à la direction (S) de stratification.

3. Procédé selon la revendication 1, comprenant après l'étape c) ou après l'étape d) une étape consistant à :
e. conférer sa forme finale à la stratification libre (202, 204) par un usinage par enlèvement de matière.

4. Procédé selon la revendication 1, comprenant une étape d'usinage par enlèvement de matière de la forme de positionnement (211, 213) réalisée au cours de l'étape a) ou de l'étape c).

5. Procédé selon la revendication 1, comprenant une étape d'usinage par enlèvement de matière de la surface d'accrochage (212, 214) réalisée au cours de l'étape a) ou de l'étape c).

6. Procédé selon la revendication 1, dans lequel le support extrinsèque (210, 215) est constitué d'un matériau métallique

7. Procédé selon la revendication 6, dans lequel le support extrinsèque (210, 215) est constitué d'un alliage d'aluminium et le matériau déposé par fabrication additive est un acier.

8. Procédé selon la revendication 1, dans lequel la face du support extrinsèque (210, 215à), exposée au dépôt de la stratification libre (202, 204), comprend un revêtement facilitant la séparation du support et de la stratification libre lors de l'étape d) du procédé.

9. Procédé selon la revendication 1, dans lequel la surface du support (210, 215) exposée au dépôt de la stratification libre comprend des reliefs (432) ou des creux (431).

## Patentansprüche

1. Verfahren zur additiven Fertigung eines gestuften Werkstücks (500) mit variablem Querschnitt, das einen nicht abgestützten Teil umfasst, durch direkten Materialauftrag, welches Verfahren die Schritte umfasst, die darin bestehen:
a. eine erste Materialschichtung (201, 203) aufzutragen, die eine Form (211, 213) für das Positionieren einer extrinsischen Stütze (210, 215) und eine Einhakfläche (212, 214) umfasst;
b. eine entfernbare extrinsische Stütze (210, 215), die sich zwischen der ersten Schichtung und der freien Fläche des noch nicht hergestellten, nicht abgestützten Teils erstreckt, an der Positionierungsform (211, 213) unter Hervorstehenlassen der Einhakfläche (212, 214) aus der ersten Schichtung zu befestigen;
c. eine als freie Schichtung (202, 204) bezeichnete Schichtung auf der Stütze (210, 215) und auf der Einhakfläche (212, 214) der ersten Schichtung aufzutragen, wobei die freie Schichtung (204) eine Form (203) für das Positionieren einer extrinsischen Stütze (215) und eine Einhakfläche (214) umfasst, wobei die Schritte b) und c) bis zur Herstellung des Werkstücks wiederholt werden;
d. die Stütze (210, 215) nach der Verfestigung der freien Schichtung (202, 204) abzubauen.

2. Verfahren nach Anspruch 1, wobei die Positionierungsform (213), die im Laufe des Auftrags der freien Schichtung (202) hergestellt wird, in Bezug auf eine zur Schichtungsrichtung (S) parallele Achse seitlich von der Positionierungsform (211), die beim vorhergehenden Vorgang hergestellt wurde, beabstandet ist.

3. Verfahren nach Anspruch 1, das nach dem Schritt c) oder nach dem Schritt d) einen Schritt umfasst, der darin besteht:
e. der freien Schichtung (202, 204) durch eine materialabtragende Bearbeitung ihre endgültige Form zu verleihen.

4. Verfahren nach Anspruch 1, das einen Schritt der materialabtragenden Bearbeitung der im Laufe des Schritts a) oder des Schritts c) hergestellten Positionierungsform (211, 213) umfasst.

5. Verfahren nach Anspruch 1, das einen Schritt der materialabtragenden Bearbeitung der im Laufe des Schritts a) oder des Schritts c) hergestellten Einhakfläche (212, 214) umfasst.

6. Verfahren nach Anspruch 1, wobei die extrinsische Stütze (210, 215) aus einem metallischen Material besteht.

7. Verfahren nach Anspruch 6, wobei die extrinsische Stütze (210, 215) aus einer Aluminiumlegierung besteht, und das durch additive Fertigung aufgetragene Material ein Stahl ist.

8. Verfahren nach Anspruch 1, wobei die Seite der extrinsischen Stütze (210, 215ä), die dem Auftrag der freien Schichtung (202, 204) ausgesetzt ist, eine Beschichtung umfasst, die das Trennen der Stütze und der freien Schichtung im Schritt d) des Verfahrens erleichtert.

9. Verfahren nach Anspruch 1, wobei die Fläche der Stütze (210, 215), die dem Auftrag der freien Schichtung ausgesetzt ist, Erhebungen (432) oder Vertiefungen (431) umfasst.

## Claims

1. A method for additive manufacturing by direct material deposition of a stepped part (500) having a variable cross-section including an unsupported portion, which method comprises the steps of:
a. depositing a first material lamination (201, 203) comprising a shape (211, 213) for positioning an extrinsic support (210, 215) and a gripping surface (212, 214);
b. fastening a removable extrinsic support (210, 215) extending between said first lamination and the free surface of the unsupported portion not yet made, on the positioning shape (211, 213) while allowing the gripping surface (212, 214) to emerge from said first lamination;
c. depositing a lamination, called free lamination (202, 204), on said support (210, 215) and on the gripping surface (212, 214) of the first lamination, said free lamination (204) comprising a shape (203) for positioning an extrinsic support (215) and a gripping surface (214), steps b) and c) being repeated until the part is made;
d. dismounting the support (210, 215) after solidification of the free lamination (202, 204).

2. The method according to claim 1, wherein the positioning shape (213) made during the deposition of the free lamination (202) is laterally spaced from the positioning shape (211) made during the previous operation relative to an axis parallel to the direction (S) of lamination.

3. The method according to claim 1, comprising after step c) or after step d) a step of:
e. giving the final shape to the free lamination (202, 204) by material-removing machining.

4. The method according to claim 1, comprising a step of material-removing machining of the positioning shape (211, 213) made during step a) or step c).

5. The method according to claim 1, comprising a step of material-removing machining of the gripping surface (212, 214) made during step a) or step c).

6. The method according to claim 1, wherein the extrinsic support (210, 215) consists of a metallic material.

7. The method according to claim 6, wherein the extrinsic support (210, 215) consists of an aluminium alloy and the material deposited by additive manufacturing is a steel.

8. The method according to claim 1, wherein the face of the extrinsic support (210, 215), exposed to the deposition of the free lamination (202, 204), comprises a coating facilitating the separation of the support and the free lamination during step d) of the method.

9. The method according to claim 1, wherein the surface of the support (210, 215) exposed to the deposition of the free lamination comprises reliefs (432) or recesses (431).
